# EUROPEAN PATENT SPECIFICATION

(11) **EP 1 614 240 B1**
(45) Date of publication and mention of the grant of the patent: **30.08.2006**
(21) Application number: 03783816.6
(22) Date of filing: 05.12.2003
(51) Int. Cl.: H04B 10/22, G01D 5/26

(54) **OPTICAL SYSTEM AND METHOD FOR MONITORING VARIABLE IN ROTATING MEMBER**
OPTISCHES SYSTEM UND VERFAHREN ZUR VARIABLENÜBERWACHUNG IN EINEM DREHGLIED
SYSTEME OPTIQUE ET PROCEDE DE CONTROLE DE VARIABLE APPLIQUEE A UN ELEMENT ROTATIF

(30) Priority: 02.04.2003 ZA 200302585
(43) Date of publication of application: 11.01.2006
(73) Proprietor: University of Johannesburg, 2006 Auckland Park (ZA)
(72) Inventor: SWART, Pieter, Lodewikus, 1709 Quellerina (ZA); KRUGER, Ludi, 575 34th Avenue, 0186 Pretoria (ZA); CHTCHERBAKOV, Anatoli, A., 77 Kessel Street, 2195 Johannesburg (ZA); VAN WYK, Albertus, Japie, Plot 64, 0186 Pretoria (ZA)
(74) Representative: Senior, Alan Murray
(86) International application number: PCT/ZA2003/000181
(87) International publication number: WO 2004/088884

(56) References cited:
- US-A- 3 962 911
- US-A- 4 672 214
- US-A- 4 746 791
- US-A- 4 767 175
- US-A- 5 182 953

## Description

### TECHNICAL FIELD

This invention relates to a system and method utilizing optical means to measure or monitor variables relating to a rotating member, in use.

It is possible to measure torsion in rotating systems by mechanical strain gauges that are mounted on the rotating member such as a shaft. The mounting angles of the strain gauges on the shaft are chosen such that they measure tensile or compressive strain. However, this system and method require the use of slip rings to transfer electrical signals from the rotating member to a stationary measuring station. This introduces added complexity, unreliability and electrical noise into the measurements.

One way of measuring torsion without having physical contact with the rotating member is by using surface acoustic waves (SAWs). A SAW device can be rigidly mounted on a flat region on the member and when the member experiences torque, the torque will stress the sensor and turn it into a wireless, passive, lightweight torque detector. Although this technique does not require slip rings, it is still prone to electrical noise.

Another known system and method measure torsion from a considerable distance from the member by magnetically programming the member and using proprietary circuitry and signal conditioning. The system measures the modifications of the magnetic field generated by the shaft torsion when torque is applied. An important disadvantage of this system is that the member has to be made of a ferromagnetic material with a memory of magnetization.

US Patent 4,746,791 discloses a sensor for monitoring a variable relating to a rotating member. The sensor compises an optical source on a stationary station, a transducer and an optical tramsimission system between said source and transducer.

### OBJECT OF THE INVENTION

Accordingly, it is an object of the present invention to provide a non-contact system and method for measuring and/or monitoring in use variables relating to a rotating member with which the applicant believes the aforementioned disadvantages may at least be alleviated.

### SUMMARY OF THE INVENTION

According to the invention there is provided a system for monitoring a variable relating to a rotating member, the system comprising:
- a source of optical energy for emitting optical energy;
- at least one transducer mountable on the member and which transducer in use modulates optical energy received from the source in accordance with changes in the variable; and an optical transmission system mountable between the source and the member for transmitting through free space optical energy between the member and the source.

The variable may be any one or more of strain, speed of rotation, temperature at or near the member, torque applied to the member, torsion in the member, bending moment, stress, pressure etc.

The optical source may be mounted on a stationary platform and may comprise a broadband optical source such as a super-luminescent diode or a frequency sweeping narrowband source, coupled to a first length of optical fibre.

The optical transmission system may comprise a first lens and a second lens, the first lens being mountable on the stationary platform in substantial alignment with the second lens which is mountable on the member. The first and second lenses may comprise a pair of graded-index (GRIN) lenses.

The transducer may comprise a second length of optical fibre and optical energy modulating means connected to the second length of optical fibre.

In a preferred embodiment of the system, the modulating means may comprise a first optical energy reflective element and a spaced second optical energy reflective, element. The first and second elements may comprise a first and a second Bragg grating having in wavelength spaced first and second center wavelengths respectively. In other embodiments the modulating means may change the phase of an interferometric signal, or the amplitude of the optical signal.

The first and second gratings may be mounted on the member in spaced relationship relative to one another and in other embodiments in at least partially overlapping relationship relative to one another. The gratings may be mounted at ninety degrees relative to one another. In a preferred embodiment the first and second gratings are mounted on the rotating member at forty-five degrees on either side of a longitudinal axis of the member.

Means for separating optical energy propagating away from the source and reflected energy propagating in an opposite direction from the transducer may be provided in the first length of fibre. The separating means may comprise an optical circulator having a first port connected to the source, a second port connected to the first lens and an output.

The output of the circulator may be connected to means sensitive to modulation of the optical energy. Said means may comprise means sensitive to the modulation in the optical domain, alternatively it may comprise a suitable converter and means sensitive to resulting electrical signals.

The invention further includes within its scope a method of monitoring a variable relating to a rotating member, the method comprising the steps of:
- transmitting optical energy through free space towards the member;
- on the member causing the energy to be modulated in accordance with the variable to be monitored;
- transmitting from the member and via free space the modulated energy to a stationary station; and
- analyzing said modulated energy at the stationary station.

### BRIEF DESCRIPTION OF THE ACCOMPANYING DIAGRAMS

The invention will now further be described, by way of example only, with reference to the accompanying diagrams wherein
- figure 1: is a block diagram of an optical non-contact system according to the invention for monitoring a variable relating to a rotating member;
- figure 2(a): is a diagrammatic representation of a first embodiment of the system with a transducer of the system mounted on a rotary shaft;
- figure 2(b): is a similar diagrammatic representation of a second embodiment of the system;
- figure 3: is a typical spectrum diagram of wavelength separation measured with the system according to the invention and in accordance with the method according to the invention;
- figure 4: is a spectrum diagram generated in accordance with the method of the invention and illustrating changes in wavelength separation for three different values of torque applied to the shaft; and
- figure 5: is a graph illustrating a comparison between theoretical calculated values and measured values of change in wavelength separation against torque.

### DESCRIPTION OF PREFERRED EMBODIMENTS OF THE INVENTION

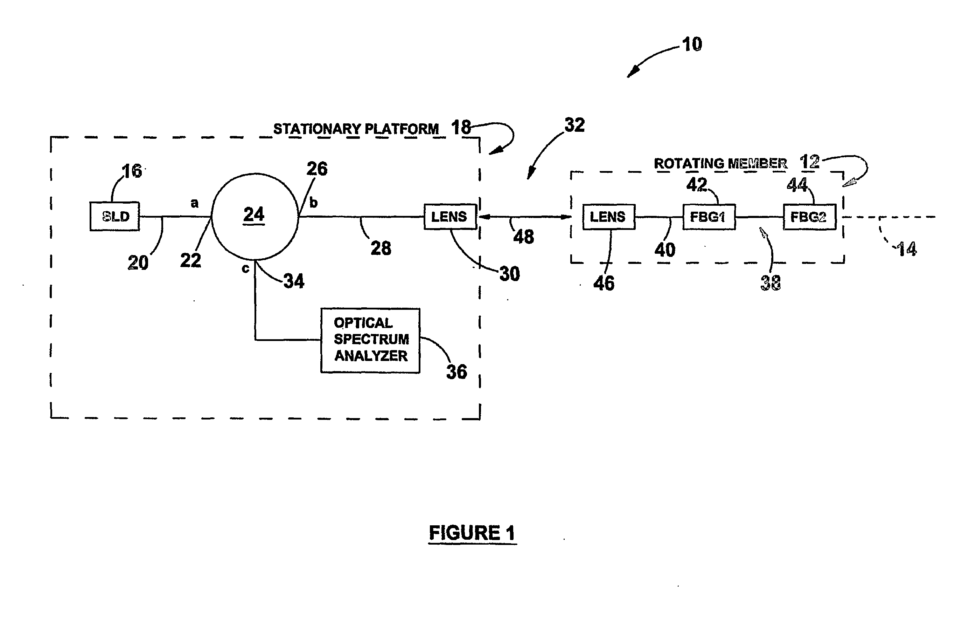

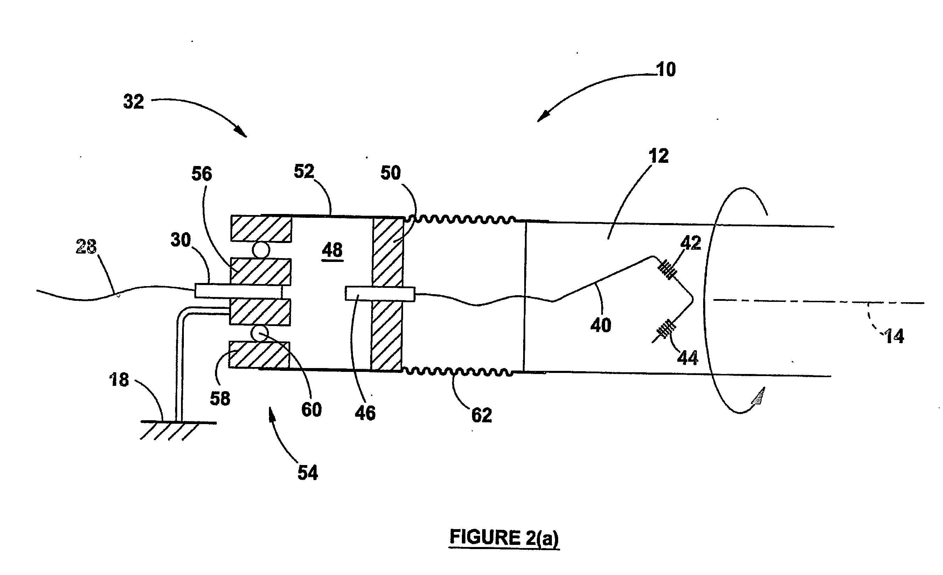

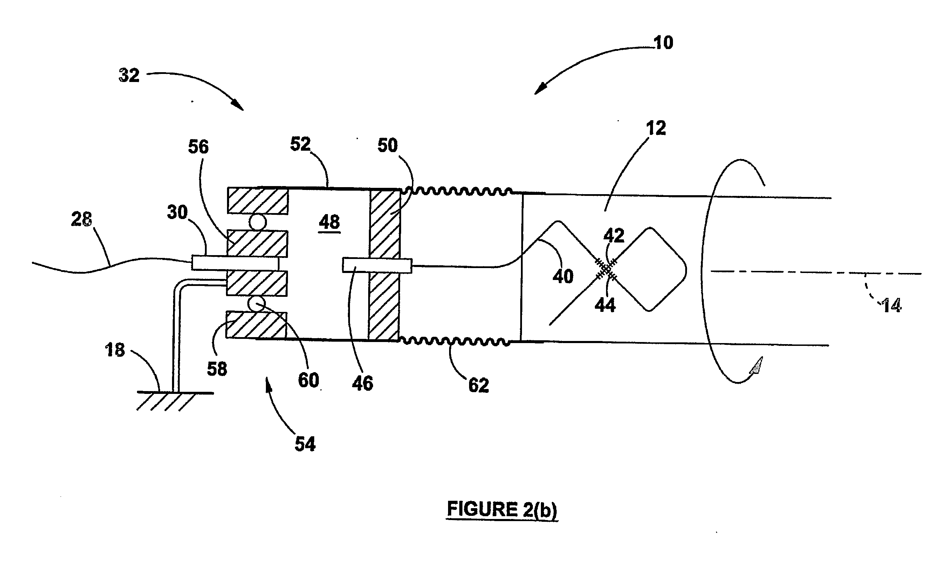

A system according to the invention for monitoring in a non-contact arrangement certain variables relating to a rotating member in use, is generally designated by the reference numeral 10 in figures 1 and 2.

The rotating member may for example be an elongate shaft 12 mounted for rotation about a longitudinal axis 14 thereof.

The system comprises an optical source 16 mounted on stationary platform 18 supporting a measuring station. The optical source 16 may comprise a broadband source such as a super-luminescent diode (SLD), alternatively it may be a sweeping narrowband source (not shown). The diode is coupled to a first length 20 of optical fibre and the first length of optical fibre is connected to a first input 22 of optical energy separating means, such as a circulator 24. A second port 26 of the circulator is connected via fibre 28 to a first lens 30 of an optical energy transmission system 32. An output 34 of the circulator is connectable to a known optical spectrum analyzer 36.

The system further comprises a transducer 38 mounted on the shaft and which transducer in use modulates optical energy received from the source in accordance with changes in the variable to be monitored. The transducer comprises a second length 40 of optical fibre and two elongate frequency sensitive optical reflector elements connected in the fibre. The two elements may comprise a first Bragg grating 42 having a first center wavelength and a second Bragg grating 44 having a second and different center wavelength. As best shown in figure 2(a), in one embodiment the gratings are mounted spaced from one another at a right angle relative to one another, and each at an angle of about 45 degrees relative to the longitudinal axis 14 of the shaft 12. The second length of fibre 40 is connected at one end thereof to a second lens 46 of the aforementioned transmission system 32. The transmission system 32 transmits optical energy through free space 48 between the platform 18 and the rotating member 12 as will hereinafter be described.

Second lens 46 is centrally mounted in a circular disc 50 mounted at one end of a tube 52. At the other end of the tube there is provided a ball bearing arrangement 54 comprising a stationary inner ring 56 and a rotary outer ring 58 separated by balls 60 in known manner. First lens 30 is centrally mounted in the inner ring 56 to be substantially axially in line with the second lens 46. A flexible bellows member 62 is provided drivingly to connect the tube 52 to the shaft 12.

Optical energy propagates from source 16 in a first direction via circulator 24, lens 30, free space 48, lens 46 and optical fibre 40. Light of a first wavelength is reflected by grating 42 to propagate in the opposite direction. Light of a second wavelength is similarly reflected by grating 44. The values of the wavelengths are proportional to the strain in the shaft. The reflected energy is separated from the energy propagating in the first direction by the circulator 24. The reflected energy is directed to the analyzer 36.

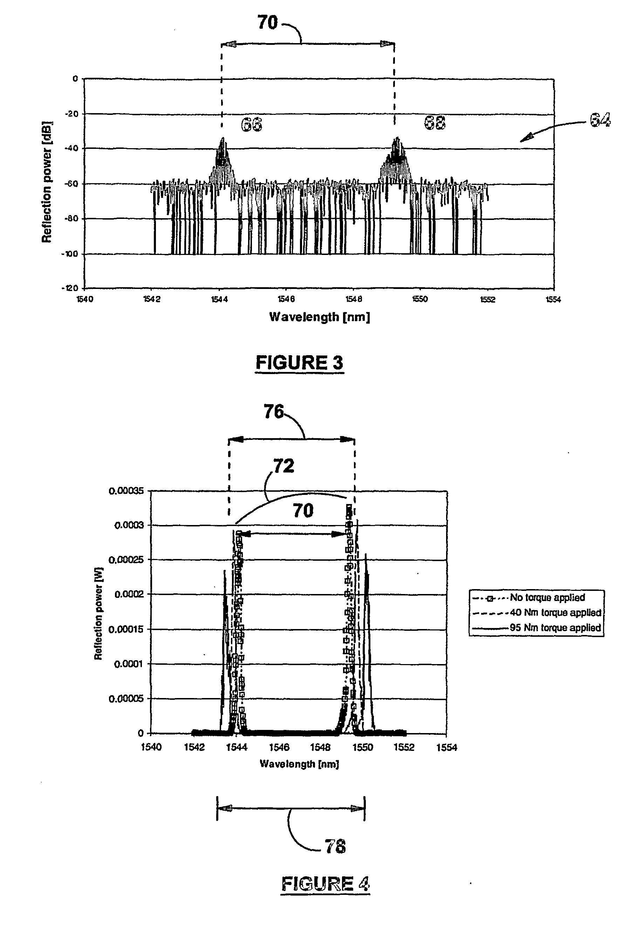

A typical diagram of reflected energy against wavelength obtained from analyzer 36 is shown at 64 in figure 3. Energy reflected by grating 42 is shown at 66 in figure 3 and energy reflected by grating 44 is shown at 68. There is a spacing or difference 70 between the wavelengths 66 and 68.

In figure 4 there is shown a diagram corresponding to the diagram in figure 3, but for three different values of torque applied to the shaft. A first diagram for no torque applied to the shaft has a first difference 70 is shown at 72. With torque of 40 Nm applied to the shaft, the difference between the wavelengths changes to a value 76 and for torque of 95 Nm, the difference increases to a value 78.

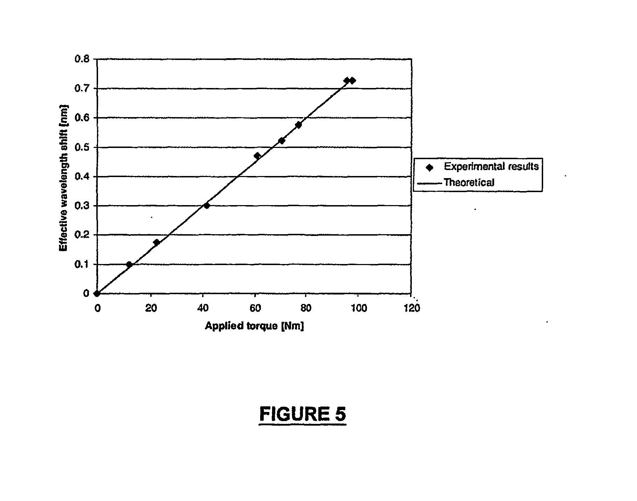

In figure 5 there is illustrated with squares measured values in wavelength difference against applied torque for comparison with theoretically computed values which are shown with a straight solid line.

It has been found that the differential mode shift in wavelength between the reflected signals is proportional to the torsion and that a common mode shift, that is a change in the mean value of the wavelengths is proportional to the temperature of the, gratings and hence the shaft or a region about the shaft. Because the measurement system and method enable one to separate strain and temperature effects, it is possible to compensate for temperature variations.

It is also possible with the system and method according to the invention to measure any one or more of other variables such as temperature, torque, strain, stress, bending moment, pressure. For example, amplitude modulation introduced to the signals by slight misalignment of the lenses 30 and 46 carries information regarding speed of rotation of the rotating shaft.

Although the optical sensors measure primarily strain and temperature, with other configurations of the sensors, it would be possible to do simultaneous measurements of temperature, bending moment changes, torsion and rotational speed.

In the configuration in figure 2(b), where the same numerals are used as in figure 2(a) for the same parts, the gratings 42 and 44 are located in substantially the same location on the shaft 12 in partially overlapping relationship. This configuration enables measurement of time dependent or rotational angle dependent bending moment. A common mode signal relating to the temperature at the shaft 12 which would normally change relatively slowly, could be separated from the signal relating to time dependent bending moment by a suitable low pass or band pass filter connected after detection of the optical signals.

## Claims

1. A system for monitoring a variable relating to a rotating member (12) the system comprising:
- a source (16) of optical energy for emitting optical energy and which source is mountable at a stationary station (18);
- at least one optical transducer (38) which in use modulates optical energy received from the source (16) in accordance with changes in the variable relating to the member (12); and
- an optical transmission system mountable between the source (16) and the transducer (38) for transmitting through free space emitted optical energy from the stationary station (18) to the transducer (38) and the modulated optical energy from the transducer (38) to the stationary station (18)
**characterized in that**:
the optical transducer (38) is mountable on the rotating member (12).

2. A system as claimed in claim 1 wherein the optical source (16) comprises one of a broadband optical source and a frequency sweeping narrowband source, coupled to a first length (20) of optical fibre.

3. A system as claimed in claim 2 wherein the optical transmission system comprises a first lens (30) and a second lens (46), the first lens (30) being mountable on the stationary station (18) in substantial alignment with the second tens (46) which is mountable on the member (12).

4. A system as claimed in claim 3 wherein the first lens (30) and the second lens, (46) comprise a pair of graded-index lenses.

5. A system as claimed in any one of claims 2 to 4 wherein the transducer (38) comprises a second length (40) of optical fibre mountable on the rotating member (12) and an optical energy modulating arrangement (42,44) connected to the second length (40) of optical fibre.

6. A system as claimed in claim 5 wherein the modulating arrangement (42,44) comprises a first optical energy reflective element (42) and a second optical energy reflective element (44).

7. A system as claimed in claim 6 wherein the first (42) and second (44) elements comprise a first and a second Bragg grating respectively having respective center frequencies which are spaced in wavelength.

8. A system as claimed in claim 6 or claim 7 wherein the first (42) and second (44) elements are mounted on the member (12) in spaced relationship relative to one another.

9. A system as claimed in claim 6 or claim 7 wherein the first (42) and second (44) elements are mounted on the member in at least partially overlapping relationship with one another.

10. A system as claimed in claim 8 or claim 9 wherein the first (42) and second (44) elements are mounted on the member at ninety degrees relative to one another.

11. A system as claimed in any one of claims 8 to 10 wherein each of the first element (42) and the second element (44) extends at an angle of forty-five degrees to a longitudinal axis (14) of the rotating member (12).

12. A system as claimed in any one of claims 3 to 10 comprising means (24) for separating optical energy emitted by the source (16) and modulated energy propagating from the transducer (38).

13. A system as claimed in claim 12 wherein said means (24) comprises an optical circulator having a first port (22) connected to the source, (16) a second port (26) connected to the first lens (30) and an output. (34)

14. A system as claimed in claim 13 wherein the output (34) of the circulator (24) is connected to means (36) sensitive to modulation of the optical energy.

15. A method of monitoring a variable relating to a rotating member (12), the method comprising the steps of:
- transmitting from a stationary station (18) optical energy through free space towards the member (12);
- receiving the transmitted energy and causing the energy to be modulated in accordance with the variable to be monitored;
- transmitting via free space the modulated energy and
- receiving and analyzing said modulated energy at the stationary station (18)
**characterised in that**:
the transmitted energy is received on the member and, after modulation, transmitted from the member to the stationary station (18).

16. A method as claimed in claim 15 wherein during modulation of the energy, a first and a second optical energy reflective elements (42,44) are used on the rotating member (12) and which elements reflect optical energy of a first and a second wavelengths respectively and wherein a change in an average value of said wavelengths is associated with a first variable relating to the rotating member (12) and a change in a difference between said wavelengths is associated with a second variable relating to the rotating member (12).

17. A method as claimed in claim 16 wherein the first variable is temperature on the member and the second variable is torque applied to the member (12).

## Patentansprüche

1. System zur Überwachung einer Variablen betreffend ein rotierendes Teil (12), wobei das System aufweist:
- eine Quelle optischer Energie (16) zur Aussendung von optischer Energie, wobei diese Quelle an einer stationären Position bzw. Stelle (18) befestigbar ist;
- mindestens einen optischen Transducer (38), der im Gebrauch von der Quelle (16) empfangene optische Energie in Übereinstimmung mit bzw. Abhängigkeit von Änderungen der Variablen betreffend das Teil (12) moduliert; und
- ein optisches Übertragungssystem, das zwischen der Quelle (16) und dem Transducer (38) befestigbar ist, zur Übertragung ausgesendeter optischer Energie durch den freien Raum von der stationären Position bzw. Stelle (18) zum Transducer (38) und der modulierten optischen Energie vom Transducer (38) zur stationären Position bzw. Stelle (18);
**dadurch gekennzeichnet, daß**
der opische Transducer (38) an dem rotierenden Teil (12) befestigbar ist.

2. System nach Anspruch 1, wobei die optische Quelle (16) eines von einer optischen Breitbandquelle und einer frequenzdurchstimmbaren bzw. frequenzvariierenden Schmalbandquelle aufweist, gekoppelt mit einer ersten Länge (20) eines Lichtleiters.

3. System nach Anspruch 2, wobei das optische Übertragungssystem eine erste Linse (30) und und eine zweite Linse (46) aufweist, wobei die erste Linse (30) an der stationären Position bzw, Stelle (18) im wesentlichen in Ausrichtung mit der zweiten Linse (46) befestigbar ist, die am Teil (12) befestigbar ist.

4. System nach Anspruch 3, wobei die erste Linse (30) und die zweite Linse (46) ein Paar von Gradienten-Index-Linsen aufweisen.

5. System nach einem der Ansprüche 2 bis 4, wobei der Transducer (38) eine zweite Länge (40) eines Lichtleiters, der an dem rotierenden Teil (12) befestigbar ist, und eine optische Energie modulierende Anordnung (42, 44), die mit der zweiten Länge (40) eines Lichtleiters verbunden ist, aufweist.

6. System nach Anspruch 5, wobei die modulierende Anordnung (42, 44) ein erstes optische Energie reflektierendes Element (42) und ein zweites optische Energie reflektierendes Element (44) aufweist.

7. System nach Anspruch 6, wobei das erste (42) und zweite (44) Element ein erstes bzw. zweites Bragg-Gitter mit jeweiligen Mittenfrequenzen aufweisen, die in der bzw. nach ihrer Wellenlänge beabstandet sind.

8. System nach Anspruch 6 oder 7, wobei das erste (42) und zweite (44) Element auf dem Teil (12) beabstandet relativ zueinander befestigt sind.

9. System nach Anspruch 6 oder 7, wobei das erste (42) und zweite (44) Element auf dem Teil einander zumindest teilweise überlappend befestigt sind.

10. System nach Anspruch 8 oder 9, wobei das erste (42) und zweite (44) Element auf dem Teil (12) mit 90 Grad relativ zueinander befestigt sind.

11. System nach einem der Ansprüche 8 bis 10, wobei sich das erste Element (42) und das zweite Element (44) jeweils mit einem Winkel von 45 Grad zu der longitudinalen Achse (14) des rotierenden Teils (12) erstrecken.

12. System nach einem der Ansprüche 3 bis 10, aufweisend ein Mittel (24) zur Separation von optischer Energie, die von der Quelle (16) ausgesendet wird, und modulierter Energie, die sich vom Transducer (38) fortpflanzt bzw. ausbreitet.

13. System nach Anspruch 12, wobei das Mittel (24) einen optischen Zirkulator mit einer ersten Öffnung (22), die mit der Quelle (16) verbunden ist, einer zweiten Öffnung (26), die mit der ersten Linse (30) und einen Ausgang (34) verbunden ist, aufweist.

14. System nach Anspruch 13, wobei der Ausgang (34) des Zirkulators (24) einem Mittel verbunden ist, das sensitiv ist, um die opische Energie zu modulieren.

15. Verfahren zur Überwachung einer Variablen betreffend ein rotierendes Teil (12), wobei das Verfahren folgende Schritte aufweist:
- Übertragen von optischer Energie von einer stationären Position bzw. Stelle (18) durch freien Raum zu dem Teil (12);
- Empfangen der übertragenen Energie und bewirken, daß die Energie in Übereinstimmung mit bzw. Abhängigkeit von der überwachten Variablen moduliert wird;
- Übertragen der modulierten Energie durch den freien Raum; und
- Empfangen und Analysieren der modulierten Energie an der stationären Position bzw. Stelle (18);
**dadurch gekennzeichnet, daß**
die übertragene Energie am Teil empfangen und, nach Modulation, vom Teil zur stationären Position bzw. Stelle (18) übertragen wird.

16. Verfahren nach Anspruch 15, wobei während der Modulation der Energie ein erstes und ein zweites optische Energie reflektierendes Element (42, 44) an dem rotierenden Teil (12) verwendet werden, wobei diese Elemente optische Energie einer ersten bzw. einer zweiten Wellenlänge reflektieren, und wobei eine Änderung eines Mittelwerts der Wellenlängen mit einer ersten Variablen betreffend das rotierende Teil (12) verknüpft wird und eine Änderung einer Differenz der Wellenlängen mit einer zweiten Variablen betreffend das rotierende Teil (12) verknüpft wird.

17. Verfahren nach Anspruch 16, wobei die erste Variable die Temperatur auf dem Teil und die zweite Variable das Drehmoment, das auf das Teil (18) ausgeübt wird, ist.

## Revendications

1. Système pour contrôler une variable relative à un élément rotatif (12), lequel système comprenant :
- une source (16) d'énergie optique pour l'émission d'une énergie optique, et laquelle source peut être montée sur une station stationnaire (18) ;
- au moins un transducteur optique (38) dont l'utilisation consiste à moduler l'énergie optique reçue de la source (16) en accord avec les changements de la variable relative à l'élément (12) ; et
- un système de transmission optique pouvant être monté entre la source (16) et le transducteur (38) pour transmettre à travers l'espace libre l'énergie optique émise de la station stationnaire (18) vers le transducteur (38) et l'énergie optique modulée du transducteur (38) vers la station stationnaire (18),
**caractérisé en ce que** :
le transducteur optique (38) peut être monté sur l'élément rotatif (12).

2. Système selon la revendication 1 dans lequel la source optique (16) comprend l'une d'une source optique à large bande et d'une source à bande étroite à balayage de fréquence, couplée à une première longueur (20) de fibre optique.

3. Système selon la revendication 2 dans lequel le système de transmission optique comprend une première lentille (30) et une seconde lentille (46), la première lentille (30) pouvant être montée sur la station stationnaire (18) sensiblement en alignement avec la seconde lentille (46) qui peut être montée sur l'élément (12).

4. Système selon la revendication 3 dans lequel la première lentille (30) et la seconde lentille (46) comprennent une paire de lentilles à gradient d'indice.

5. Système selon l'une quelconque des revendications 2 à 4 dans lequel le transducteur (38) comprend une seconde longueur (40) de fibre optique qui peut être montée sur l'élément rotatif (12) et un dispositif de modulation de l'énergie optique (42, 44), connecté à la seconde longueur (40) de fibre optique.

6. Système selon la revendication 5 dans lequel le dispositif de modulation (42, 44) comprend un premier élément (42) réflecteur de l'énergie optique et un second élément (44) réflecteur de l'énergie optique.

7. Système selon la revendication 6 dans lequel les premier (42) et (44) second éléments comprennent respectivement un premier et un second réseau de Bragg possédant des fréquences respectives centrales qui sont espacées dans la longueur d'onde.

8. Système selon la revendication 6 ou la revendication 7 dans lequel les premier (42) et (44) second éléments sont montés sur l'élément (12) de façon à être espacés l'un par rapport à l'autre.

9. Système selon la revendication 6 ou la revendication 7 dans lequel les premier (42) et second (44) éléments sont montés sur l'élément de façon à être au moins partiellement chevauchés l'un par rapport à l'autre.

10. Système selon la revendications 8 ou la revendication 9 dans lequel les premier (42) et second (44) éléments sont montés sur l'élément à quatre-vingt-dix degrés l'un par rapport à l'autre.

11. Système selon l'une quelconque des revendications 8 à 10 dans lequel chacun du premier élément (42) et du second élément (44) se situe à un angle de quarante-cinq degrés par rapport à un axe longitudinal (14) de l'élément rotatif (12).

12. Système selon l'une quelconque des revendications 3 à 10 comprenant un moyen (24) pour séparer l'énergie optique émise par la source (16) et l'énergie modulée se propageant à partir du transducteur (38).

13. Système selon la revendication 12 dans lequel ledit moyen (24) comprend un circulateur optique possédant un premier port (22) connecté à la source (16), un second port (26) connecté à la première lentille (30) et une sortie (34).

14. Système selon la revendication 13 dans lequel la sortie (34) du circulateur (24) est connectée à un moyen (36) sensible à la modulation de l'énergie optique.

15. Procédé pour contrôler une variable relative à un élément rotatif (12), le procédé comprenant les étapes consistant à :
- transmettre d'une station stationnaire (18) l'énergie optique à travers des espaces libres vers l'élément (12) ;
- recevoir l'énergie transmise et provoquer la modulation de l'énergie en accord avec la variable à contrôler ;
- transmettre via un espace libre l'énergie modulée et
- recevoir et analyser ladite énergie modulée à la station stationnaire (18).
**caractérisé en ce que** :
l'énergie transmise est reçue sur l'élément et, après modulation, transmise de l'élément vers la station stationnaire (18).

16. Procédé selon la revendication 15 dans lequel, durant la modulation de l'énergie, des premier et second éléments réflecteurs de l'énergie optique (42, 44) sont utilisés sur l'élément rotatif (12), lesquels éléments reflètent respectivement l'énergie optique d'une première et d'une seconde longueurs d'onde et dans lequel un changement de valeur moyenne desdites longueurs d'onde est associé à une première variable relative à l'élément rotatif (12) et un changement de différence entre lesdites longueurs d'onde est associé à une seconde variable relative à l'élément rotatif (12).

17. Procédé selon la revendication 16 dans lequel la première variable est la température sur l'élément et la seconde variable est le couple appliqué à l'élément (12).
